# EUROPÄISCHE PATENTANMELDUNG

(11) **EP 4 553 477 A1**
(43) Veröffentlichungstag der Anmeldung: **14.05.2025**
(21) Anmeldenummer: 24211760.4
(22) Anmeldetag: 08.11.2024
(51) Int. Cl.: G01M 11/02, B24B 13/005, G02B 7/00, B25B 11/00

(54) **HALTEVORRICHTUNG UND VERFAHREN ZUM HALTEN EINES OPTISCHEN ELEMENTS FÜR DESSEN PRÜFUNG**

(30) Priorität: 10.11.2023 DE 102023131269
(71) Anmelder: Trioptics GmbH, 22880 Wedel (DE)
(72) Erfinder: Wilde, Christian, 22880 Wedel (DE); Bremer, Kevin, 22880 Wedel (DE); Jorda, Paul David, 22880 Wedel (DE); Langehanenberg, Patrik, 22880 Wedel (DE)
(74) Vertreter: Waldauf, Alexander

(57) **Zusammenfassung**

Eine Haltevorrichtung (100) zum Halten eines optischen Elements (OE) für dessen Prüfung umfasst einen hohlen Grundkörper (110), einen feststehenden Ring (120) und einen beweglichen Ring (130). Der feststehende Ring (no) ist an dem Grundkörper (110) angeordnet oder befestigt, wobei der feststehende Ring (120) an einem axialen Ende eine Kontaktfläche (122) zur Anlage gegen das optische Element (OE) aufweist. Der bewegliche Ring (130) ist relativ zu dem feststehenden Ring (120) und dem Grundkörper (110) axial verschiebbar an dem Grundkörper (110) gelagert, wobei der bewegliche Ring (130) an einem axialen Ende eine Kontaktfläche (132) zur Anlage gegen das optische Element (OE) aufweist. Derfeststehende Ring (120) und der bewegliche Ring (130) sind koaxial zueinander angeordnet, wobei zumindest zwischen dem feststehenden Ring (120) und dem beweglichen Ring (130) ein Spalt (140) angeordnet ist, in dem ein Vakuum zum Halten des optischen Elements (OE) erzeugbar ist.

## Beschreibung

Die Erfindung geht von einer Vorrichtung oder einem Verfahren nach Gattung der unabhängigen Ansprüche aus.

Eine Messung von zu prüfenden optischen Elementen bzw. Prüflingen bei herkömmlichen Halterungen mit Vakuum kann entweder nur einseitig oder durch ein Glasfenster hindurch erfolgen. Alternativ kann herkömmlicherweise der Prüfling mechanisch am Umfang gegriffen werden.

Die JP2014000621A beschreibt eine Vorrichtung zur Linsenhalterung mit Vakuum ohne Fenster bei einem Bonding-Prozess. Der Linsenhalter umfasst dabei einen äußeren Bereich und einen inneren Bereich, welche über Lager flexibel und dicht miteinander verbunden sind.

### Offenbarung der Erfindung

Vor diesem Hintergrund werden mit dem hier vorgestellten Ansatz eine verbesserte Haltevorrichtung zum Halten eines optischen Elements für dessen Prüfung und ein verbessertes Verfahren zum Halten eines optischen Elements für dessen Prüfung gemäß den Hauptansprüchen vorgestellt. Durch die in den abhängigen Ansprüchen aufgeführten Maßnahmen sind vorteilhafte Weiterbildungen und Verbesserungen der im unabhängigen Anspruch angegebenen Vorrichtung möglich.

Der beschriebene Ansatz ermöglicht insbesondere einen sicheren Halt des zu prüfenden optischen Elements während einer Prüfung desselben oder, anders ausgedrückt, während eines Mess- und Ausrichtungsprozesses. Hierbei kann beispielsweise auch vermieden werden, dass die Prüfung durch die Haltevorrichtung beeinflusst wird. Ferner kann insbesondere eine universell einsetzbare Haltevorrichtung bereitgestellt werden, die optische Elemente mit unterschiedlichen Geometrien halten kann.

Eine Haltevorrichtung zum Halten eines optischen Elements für dessen Prüfung umfasst die folgenden Merkmale:
einen hohlen Grundkörper;
einen feststehenden Ring, der an dem Grundkörper angeordnet oder befestigt ist, wobei der feststehende Ring an einem axialen Ende eine Kontaktfläche zur Anlage gegen das optische Element aufweist; und
einen beweglichen Ring, der relativ zu dem feststehenden Ring und dem Grundkörper axial verschiebbar an dem Grundkörper gelagert ist, wobei der bewegliche Ring an einem axialen Ende eine Kontaktfläche zur Anlage gegen das optische Element aufweist,
wobei der feststehende Ring und der bewegliche Ring koaxial zueinander angeordnet sind, wobei zumindest zwischen dem feststehenden Ring und dem beweglichen Ring ein Spalt angeordnet ist, in dem ein Vakuum zum Halten des optischen Elements erzeugbar ist.

Das optische Element kann beispielsweise eine Linse sein. Der Grundkörper kann an einem Aktuator oder Aktor befestigbar oder befestigt sein. Der feststehende Ring und der Grundkörper können als getrennte Bauteile oder als ein Bauteil ausgeführt sein. Wenn der feststehende Ring an dem Grundkörper angeordnet ist, können der feststehende Ring und der Grundkörper als ein Bauteil bzw. als ein einstückiges Bauteil ausgeführt sein. Weiterhin kann der Grundkörper eine rotationssymmetrische oder nicht-rotationssymmetrische Geometrie aufweisen, je nachdem, welche Art von optischen Elementen gehalten werden sollen. Ist das zu haltende optische Element sphärisch oder asphärisch, kann ein zylindrischer Grundkörper verwendet werden. Der feststehende Ring kann hohlzylindrisch ausgeformt sein. Der bewegliche Ring kann hohlzylindrisch ausgeformt sein. Hierbei kann ein Ring auch als ein Ringbauteil, ein Ringelement oder eine Ringeinheit bezeichnet werden.

Gemäß einer Ausführungsform kann der bewegliche Ring radial innerhalb oder außerhalb des feststehenden Rings angeordnet sein. Auf diese Weise können sowohl ein Schutz für den beweglichen Ring als auch eine Lagerung desselben sicher realisiert werden.

Ferner kann in dem beweglichen oder feststehenden Ring eine Durchgangsöffnung axial durch den gesamten beweglichen Ring hindurch ausgeformt sein. Die Durchgangsöffnung kann auch als eine Apertur bezeichnet werden. Somit kann verhindert werden, dass die Haltevorrichtung die Prüfung bzw. Messung beeinflusst, da auf ein Fenster verzichtet werden kann. Denn andernfalls könnten Messungen durch ein Glasfenster fehlerbehaftet sein, da das Glasfenster einen nicht trivial quantifizierbaren und veränderlichen Einfluss auf Messergebnisse haben kann.

Insbesondere können die Kontaktflächen der Ringe als Schneiden ausgeformt sein. Zusätzlich oder alternativ können die Kontaktflächen ausgebildet sein, um entlang konzentrischer Kreise an dem optischen Element anzuliegen. Denkbar wären an dieser Stelle auch andere konzentrische Geometiren, wie z.B. Zylinder, um auch nicht-rotationssymmetrische Prüflinge zu halten. Es kann somit eine Haltevorrichtung in Gestalt einer Vakuum-Doppelringschneide bereitgestellt werden, die für einen sicheren Halt des auch als Prüfling bezeichneten optischen Elements während eines Mess- und Ausrichtungsprozesses sorgen kann. Zusätzlich kann die Vakuum-Doppelringschneide universell für mehrere Prüflingsgeometrien in einem Montageprozess passen.

Auch kann die Haltevorrichtung eine Vorspanneinrichtung zum Vorspannen des beweglichen Rings weg von dem Grundkörper aufweisen. Hierbei kann die Vorspanneinrichtung insbesondere ein elastisches Mittel oder Druckluftmittel aufweisen. So kann die Anlage des beweglichen Rings gegen das optische Element unabhängig von einer Orientierung der Haltevorrichtung bezüglich des Schwerefeldes der Erde zuverlässig erreicht werden.

Gemäß einer Ausführungsform kann der Grundkörper einen Führungsabschnitt aufweisen, der ausgeformt ist, um eine Bewegung des beweglichen Rings relativ zu dem Grundkörper und dem feststehenden Ring zu führen. Auf diese Weise kann der bewegliche Ring präzise und zuverlässig geführt werden, um eine Anpassung an die Geometrie des optischen Elements zu ermöglichen.

Dabei kann zwischen dem Führungsabschnitt des Grundkörpers und einem geführten Abschnitt des beweglichen Rings eine Passung, insbesondere eine Spielpassung, als Gleitführung eingerichtet sein.

Zusätzlich oder alternativ kann die Haltevorrichtung an dem Grundkörper angebrachte Führungsmittel aufweisen, die ausgebildet sind, um eine Bewegung des beweglichen Rings relativ zu dem Grundkörper und dem feststehenden Ring zu führen. Hierbei können die Führungsmittel insbesondere eine Membranführung aufweisen. Auch auf diese Weise kann eine exakte Bewegungsführung, bei gleichzeitiger Abdichtung für das anzulegende Vakuum, erreicht werden.

Ferner kann der Grundkörper mindestens einen Anschlagabschnitt aufweisen, der ausgeformt ist, um eine Bewegung des beweglichen Rings relativ zu dem Grundkörper und dem feststehenden Ring zu begrenzen. Insbesondere kann somit der bewegliche Ring sicher an dem Grundkörper gehalten werden, ohne herauszufallen. Ferner kann ein Hub der Bewegung genau vorgegeben werden.

Auch kann an dem beweglichen Ring eine Schulter ausgeformt sein, die ausgebildet ist, um eine Bewegung des beweglichen Rings relativ zu dem Grundkörper und dem feststehenden Ring zu begrenzen. Der Hub der Bewegung kann auch auf diese Weise präzise vorgegeben werden. Zudem kann ebenfalls ein zuverlässiger Halt des beweglichen Rings an dem Grundkörper erreicht werden.

Gemäß einer Ausführungsform kann der bewegliche Ring einteilig ausgeformt sein. Eine solche Ausführungsform bietet den Vorteil, dass eine Anzahl von Einzelteilen der Haltevorrichtung gering gehalten werden kann. Insbesondere kann der bewegliche Ring auf diese Weise auch besonders robust ausgeführt werden.

Alternativ kann der bewegliche Ring mehrteilig ausgeführt sein. Hierbei kann an einem ersten Teil des beweglichen Rings die Kontaktfläche angeordnet sein. An einem zweiten Teil des beweglichen Rings kann ein durch den Grundkörper geführter Abschnitt angeordnet sein. Dabei können der erste Teil und der zweite Teil des beweglichen Rings miteinander verbunden sein. Der erste Teil und der zweite Teil können kraftschlüssig und zusätzlich oder alternativ formschlüssig miteinander verbunden sein. Der erste und der zweite Teil können direkt oder über mindestens ein Zwischenteil miteinander verbunden sein.

Ein Verfahren zum Halten eines optischen Elements für dessen Prüfung umfasst die folgenden Schritte:
Anordnen einer Ausführungsform einer hierin genannten Haltevorrichtung mit den Kontaktflächen in Anlage gegen das optische Element; und
Erzeugen des Vakuums in dem Spalt, um das optische Element zu halten.

Vorteilhafterweise können sowohl der Schritt des Anordnens als auch der Schritt des Erzeugens automatisiert ausgeführt werden. Nachfolgend kann die Prüfung an dem optischen Element durchgeführt werden. Im Schritt des Anordnens kann die Haltevorrichtung bewegt werden oder kann das optische Element bewegt werden oder können beide bewegt werden. Gemäß einer Ausführungsform kann im Schritt des Anordnens die Kontaktfläche des beweglichen Rings mittels einer Vorspanneinrichtung in Anlage gegen das optische Element vorgespannt werden. Auf diese Weise kann die Anlage des beweglichen Rings gegen das optische Element unabhängig von einer Ausrichtung der Haltevorrichtung im Raum zuverlässig erreicht werden.

Ausführungsbeispiele des hier vorgestellten Ansatzes sind in den Zeichnungen dargestellt und in der nachfolgenden Beschreibung näher erläutert. Es zeigt:
Fig. 1 eine schematische Schnittdarstellung eines Ausführungsbeispiels einer Haltevorrichtung zum Halten eines optischen Elements für dessen Prüfung;
Fig. 2 eine schematische Schnittdarstellung eines Ausführungsbeispiels einer Haltevorrichtung mit Vorspanneinrichtung zum Halten eines optischen Elements für dessen Prüfung; und
Fig. 3 ein Ablaufdiagramm eines Ausführungsbeispiels eines Verfahrens zum Halten eines optischen Elements für dessen Prüfung.

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

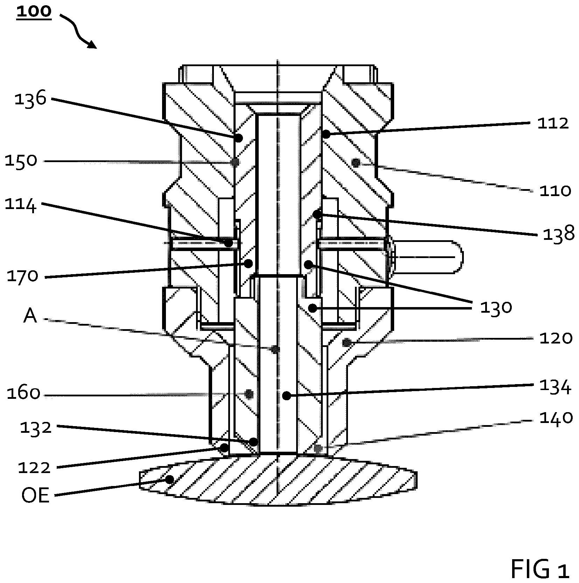

Fig. 1 zeigt eine schematische Schnittdarstellung eines Ausführungsbeispiels einer Haltevorrichtung 100 zum Halten eines optischen Elements OE für dessen Prüfung. Die Haltevorrichtung 100 ist ausgebildet, um ein optisches Element OE, bei dem es sich beispielsweise um eine Linse handelt, zumindest während einer Prüfung bzw. eines Mess- und Ausrichtungsprozesses des optischen Elements OE, das auch als Prüfling bezeichnet werden kann, zu halten.

Die Haltevorrichtung 100 umfasst einen Grundkörper 110, einen festen bzw. feststehenden Ring 120 und einen beweglichen Ring 130.

Der Grundkörper 110 ist hohl, vorteilhafterweise hohlzylindrisch, ausgeformt. Der feststehende Ring 120 ist an dem Grundkörper 110 angeordnet oder befestigt. Der feststehende Ring 120 weist an einem axialen Ende desselben eine Kontaktfläche bzw. erste Kontaktfläche 122 zur Anlage gegen das optische Element OE auf. Der bewegliche Ring 130 ist relativ zu dem feststehenden Ring 120 und dem Grund körper 110 axial verschiebbar an dem Grundkörper 110 gelagert. Der bewegliche Ring 130 weist an einem axialen Ende desselben eine Kontaktfläche bzw. zweite Kontaktfläche 132 zur Anlage gegen das optische Element OE auf. Der feststehende Ring 120 und der bewegliche Ring 130 sind dabei koaxial zueinander angeordnet. Ferner ist zumindest zwischen dem feststehenden Ring 120 und dem beweglichen Ring 130 ein Spalt 140 angeordnet. In dem Spalt 140 ist ein Vakuum zum Halten des optischen Elements OE erzeugbar. Der feststehende Ring 120 und der bewegliche Ring 130 sind durch den Spalt 140 radial voneinander beabstandet.

Insbesondere fungiert der Grundkörper 110 als eine Befestigung für den festen bzw. feststehenden Ring 120 oder, anders ausgedrückt, als ein Träger für den feststehenden Ring 120 und als Führung für den beweglichen Ring 130. Zudem ist die Haltevorrichtung 100 an dem Grundkörper 110 beispielsweise an einem Prüfgerät oder insbesondere an einem Aktuator eines Prüfgeräts montierbar.

Die Bewegung des axial verschiebbaren beweglichen Rings 130 erfolgt entlang einer Achse A. Gemäß dem hier dargestellten Ausführungsbeispiel sind zumindest der Grundkörper 110, der feststehende Ring 120 und der bewegliche Ring 130 an der Achse A ausgerichtet, insbesondere rotationssymmetrisch bezüglich derselben. Die Achse A repräsentiert beispielsweise eine Symmetrieachse und/oder Haupterstreckungsachse der Haltevorrichtung 100.

Gemäß dem hier dargestellten Ausführungsbeispiel ist der bewegliche Ring 130 radial innerhalb des feststehenden Rings 120 angeordnet. Ferner ist in dem beweglichen Ring 130 eine Durchgangsöffnung 134 axial bzw. entlang der Achse A durch den gesamten beweglichen Ring 130 hindurch ausgeformt. Die Durchgangsöffnung 134 kann auch als eine Apertur bezeichnet werden. Die Apertur erstreckt sich hierbei entlang der Achse A durch die gesamte Haltevorrichtung 100 hindurch. Gemäß einem anderen Ausführungsbeispiel kann der feststehende Ring 120 radial innerhalb des beweglichen Rings 130 angeordnet sein. Auch kann in dem feststehenden Ring 120 die Durchgangsöffnung 134 axial bzw. entlang der Achse A durch den gesamten feststehenden Ring 120 hindurch ausgeformt sein.

Ferner sind gemäß dem hier dargestellten Ausführungsbeispiel die Kontaktflächen 122 und 132 der Ringe 120 und 130 als Schneiden ausgeformt. Daher kann die Haltevorrichtung 100 auch als eine Vakuum-Doppelringschneide bezeichnet werden. Insbesondere sind die Kontaktflächen 122 und 132 somit ausgebildet, um entlang konzentrischer Kreise an dem optischen Element OE anzuliegen. Für nicht-rotationssymmetrische Prüflinge, wie z.B. Zylinderlinsen, können die Ringe 120/130 eine entsprechende, nicht-rotationssymmetrische konzentrische Geometrie aufweisen.

Auch weist gemäß dem hier dargestellten Ausführungsbeispiel der Grundkörper 110 eine Führungsfläche bzw. einen Führungsabschnitt 112 auf. Der Führungsabschnitt 112 ist ausgeformt, um eine Bewegung des beweglichen Rings 130 relativ zu dem Grundkörper 110 und dem feststehenden Ring 120 zu führen. Dabei ist zwischen dem Führungsabschnitt 112 des Grundkörpers 110 und einem geführten Abschnitt 136 des beweglichen Rings 130 eine Passung 150, insbesondere eine Spielpassung, als Gleitführung eingerichtet.

Gemäß einem anderen Ausführungsbeispiel können an dem Grundkörper 110 zusätzlich oder alternativ Führungsmittel angebracht sein, die ausgebildet sind, um eine Bewegung des beweglichen Rings 130 relativ zu dem Grundkörper 110 und dem feststehenden Ring 120 zu führen. Solche Führungsmittel können insbesondere eine Membranführung oder dergleichen aufweisen.

Gemäß einem Ausführungsbeispiel weist der Grundkörper 110 mindestens einen Anschlagabschnitt 114 auf. Der Anschlagabschnitt 114 ist ausgeformt, um die Bewegung des beweglichen Rings 130 relativ zu dem Grundkörper 110 und dem feststehenden Ring 120 zu begrenzen. Anders ausgedrückt ist der Anschlagabschnitt 114 ausgeformt, um die Bewegung des beweglichen Rings 130 entlang der Achse A in zumindest einer Richtung axial zu begrenzen.

Zusätzlich oder alternativ ist gemäß einem Ausführungsbeispiel an dem beweglichen Ring 130 eine Schulter 138 ausgeformt. Die Schulter 138 ist ausgeformt bzw. ausgebildet, um die Bewegung des beweglichen Rings 130 relativ zu dem Grundkörper 110 und dem feststehenden Ring 120 zu begrenzen. Anders ausgedrückt ist die Schulter 138 ausgeformt, um die Bewegung des beweglichen Rings 130 entlang der Achse A in zumindest eine Richtung axial zu begrenzen.

Insbesondere können der Anschlagabschnitt 114 und die Schulter 138 gemäß einem Ausführungsbeispiel zusammenwirken, um die Bewegung des beweglichen Rings 130 relativ zu dem Grundkörper 110 und dem feststehenden Ring 120 zu begrenzen.

Gemäß einem Ausführungsbeispiel ist der bewegliche Ring 130 einteilig bzw. einstückig ausgeformt. Alternativ ist der bewegliche Ring 130 mehrteilig ausgeführt, insbesondere mit einem ersten Teil 160 und einem zweiten Teil 170. Dabei ist an dem ersten Teil 160 des beweglichen Rings 130 die Kontaktfläche 132 angeordnet und ist an dem zweiten Teil 170 des beweglichen Rings ein durch den Grundkörper 110 geführter Abschnitt 136 angeordnet. Der erste Teil 160 und der zweite Teil 170 des beweglichen Rings 130 sind miteinander verbunden.

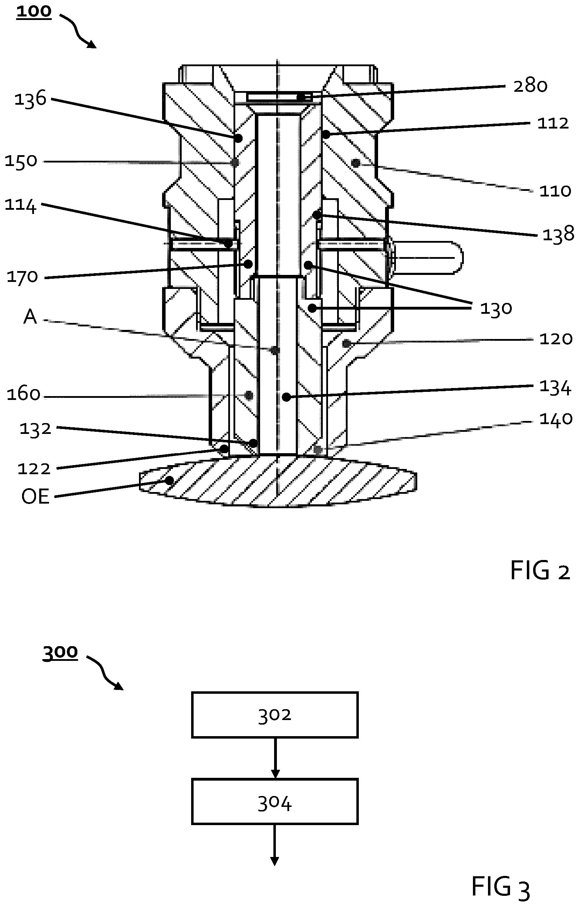

Fig. 2 zeigt eine schematische Schnittdarstellung eines Ausführungsbeispiels einer Haltevorrichtung 100 mit Vorspanneinrichtung zum Halten eines optischen Elements für dessen Prüfung. Die Haltevorrichtung 100 entspricht der Haltevorrichtung aus Fig. 1 mit Ausnahme dessen, dass die Haltevorrichtung 100 auch eine Vorspanneinrichtung 280 aufweist.

Die Vorspanneinrichtung 280 ist ausgebildet, um den beweglichen Ring 130 weg von dem Grundkörper 110 vorzuspannen. Dabei umfasst die Vorspanneinrichtung 280 beispielsweise ein elastisches Mittel, wie zum Beispiel eine Feder, oder Druckluftmittel, um den beweglichen Ring 130 von dem Grundkörper 110 weg und/oder zu dem optischen Element OE hin zu bewegen.

Die Vorspanneinrichtung 280 ist hierbei lediglich beispielhaft zwischen einem von dem optischen Element OE abgewandten Ende des beweglichen Rings 130, beispielsweise des zweiten Teils 170 desselben, und einem von dem optischen Element OE abgewandten Ende des Grundkörpers 110 angeordnet gezeigt.

Fig. 3 zeigt ein Ablaufdiagramm eines Ausführungsbeispiels eines Verfahrens 300 zum Halten eines optischen Elements für dessen Prüfung. Das Verfahren 300 zum Halten umfasst einen Schritt 302 des Anordnens und einen Schritt 304 des Erzeugens. In dem Schritt 302 des Anordnens wird die Haltevorrichtung aus einer der vorstehend beschriebenen Figuren oder eine ähnliche Haltevorrichtung mit deren Kontaktflächen in Anlage gegen ein optisches Element angeordnet. Nachfolgend wird in dem Schritt 304 des Erzeugens in dem Spalt der Haltevorrichtung ein Vakuum erzeugt, um das optische Element zu halten.

Gemäß einem Ausführungsbeispiel wird im Schritt 302 des Anordnens die Kontaktfläche des beweglichen Rings mittels einer Vorspanneinrichtung in Anlage gegen das optische Element vorgespannt. Eine solche Vorspanneinrichtung ist beispielsweise in Fig. 2 dargestellt.

Unter Bezugnahme auf die vorstehend beschriebenen Figuren werden nachfolgend Ausführungsbeispiele und Vorteile von Ausführungsbeispielen nochmals zusammenfassend und mit anderen Worten kurz erläutert.

Gemäß Ausführungsbeispielen wird insbesondere ermöglicht, dass das Messen und Halten des Prüflings bzw. des optischen Elements OE zeitgleich und aus derselben Richtung erfolgen kann, ohne dass die Halterung bzw. Haltevorrichtung 100 die Messung beeinflusst. Die Haltevorrichtung 100 ist hierbei prüflingsunabhängig ausgeführt und somit universell einsetzbar. Die Haltevorrichtung 100 ist auf einem Aktuator montierbar oder montiert, der das auch als Prüfling bezeichnete optische Element OE bewegen kann.

Es kann somit gemäß Ausführungsbeispielen verhindert werden, dass bei der Prüfung des optischen Elements OE Messungen durch ein Glasfenster durchgeführt werden müssten, die häufig fehlerbehaftet sind, da das Glasfenster einen nicht trivial quantifizierbaren und veränderlichen Einfluss hat. Dies kann insbesondere auch durch die Durchgangsöffnung 134 verhindert werden. Da es häufig nicht möglich ist, das optische Element OE an dessen Umfang zu greifen, wenn zwischen Prüfling bzw. optischen Element OE und Fassung kein Platz ist, kann gemäß Ausführungsbeispielen eine vorteilhafte andere Halterung ermöglicht werden. Im Gegensatz zum Halten am Umfang ist die Halterung mittels der Haltevorrichtung 100 zudem universell, da die Haltevorrichtung 100 sich an jede oder beinahe jede Prüflingsgeometrie anpassen kann.

Die insbesondere als Vakuum-Doppelringschneide (VDR) ausgeführte Haltevorrichtung 100 sorgt für einen sicheren Halt des Prüflings bzw. optischen Elements OE während des Mess- und Ausrichtungsprozesses bzw. während der Prüfung. Die Vakuum-Doppelringschneide bzw. Haltevorrichtung 100 hat keinen direkten Einfluss auf das Messergebnis. Zusätzlich passt die universelle Vakuum-Doppelringschneide bzw. Haltevorrichtung 100 insbesondere für mehrere Prüflingsgeometrien in einem Montageprozess.

Gemäß Ausführungsbeispielen kann durch die Haltevorrichtung 100 eine steife kraftschlüssige Verbindung zwischen Prüfling bzw. optischen Element und Peripherie hergestellt werden. Die Peripherie kann ein Aktuator sein. Durch die freie Apertur bzw. Durchgangsöffnung 134 ohne Fenster kann eine Beeinflussung der Messung vermieden werden. Dies ermöglicht den Einsatz bei allen Geräten, bei denen Störeinflüsse eines Fensters kritisch wären. Die universelle Ausführung der Haltevorrichtung 100 spart Zeit und Geld und liefert somit einen Mehrwert.

Gemäß Ausführungsbeispielen ist einer der beiden Ringe 120 und 130, d.h. der bewegliche Ring 130, senkrecht zur Halterichtung verschiebbar gelagert. Der feste bzw. feststehende Ring 120 definiert die Position, wohingegen sich der bewegliche Ring 130 an den Prüfling bzw. das optische Element OE anpasst und das Vakuum sicherstellt. Der Kontakt zwischen dem beweglichen Ring 130 und dem Prüfling bzw. optischen Element OE kann durch die Gravitation oder eine Vorspannung mittels der Vorspanneinrichtung 280 sichergestellt werden und ist somit in jeder Lageorientierung einsetzbar. Die Apertur bzw. Durchgangsöffnung 134 innerhalb des inneren Rings, hier des beweglichen Rings 130, ermöglicht die störungsfreie Messung. Das Vakuum wird in dem Spalt 140 zwischen den beiden Ringen 120 und 130 aufgebaut. Der bewegliche Ring 130 ist einerseits leicht beweglich, um sich der Kontur des optischen Elements OE anzupassen, und kann andererseits durch eine enge Führung und die Konzentrizität der Ringe 120 und 130 das Vakuum sicherstellen.

Die Bewegung des beweglichen Rings 130 kann anstatt durch die Passung 150 als Gleitführung auch mit einer Membranführung realisiert sein. Die Vorspannung kann durch die Gravitation oder andere Kraft speichernde Mittel wie Federn oder Druckluft als Vorspanneinrichtung 280 erzeugt werden. Der bewegliche Ring 130 kann einteilig oder auch mehrteilig ausgeführt sein.

## Patentansprüche

1. Haltevorrichtung (100) zum Halten eines optischen Elements (OE) für dessen Prüfung, wobei die Haltevorrichtung (100) die folgenden Merkmale aufweist:
einen hohlen Grundkörper (110);
einen feststehenden Ring (120), der an dem Grundkörper (110) angeordnet oder befestigt ist, wobei der feststehende Ring (120) an einem axialen Ende eine Kontaktfläche (122) zur Anlage gegen das optische Element (OE) aufweist; und
einen beweglichen Ring (130), der relativ zu dem feststehenden Ring (120) und dem Grundkörper (110) axial verschiebbar an dem Grundkörper (110) gelagert ist, wobei der bewegliche Ring (130) an einem axialen Ende eine Kontaktfläche (132) zur Anlage gegen das optische Element (OE) aufweist,
wobei der feststehende Ring (120) und der bewegliche Ring (130) koaxial zueinander angeordnet sind, wobei zumindest zwischen dem feststehenden Ring (120) und dem beweglichen Ring (130) ein Spalt (140) angeordnet ist, in dem ein Vakuum zum Halten des optischen Elements (OE) erzeugbar ist.

2. Haltevorrichtung (100) gemäß Anspruch 1, wobei der bewegliche Ring (130) radial innerhalb des feststehenden Rings (120) angeordnet ist.

3. Haltevorrichtung (100) gemäß Anspruch 1, wobei der bewegliche Ring (130) radial außerhalb des feststehenden Rings (120) angeordnet ist.

4. Haltevorrichtung (100) gemäß einem der vorangegangenen Ansprüche, wobei der Grundkörper (110) eine rotationssymmetrische oder nicht-rotationssymmetrische Geometrie aufweist.

5. Haltevorrichtung (100) gemäß einem der vorangegangenen Ansprüche, wobei in dem beweglichen oder feststehenden Ring (120, 130) eine Durchgangsöffnung (134) axial durch den gesamten beweglichen oder feststehenden Ring (120, 130) hindurch ausgeformt ist.

6. Haltevorrichtung (100) gemäß einem der vorangegangenen Ansprüche, wobei die Kontaktflächen (122, 132) der Ringe (120, 130) als Schneiden ausgeformt sind, und/oder wobei die Kontaktflächen (122, 132) ausgebildet sind, um entlang konzentrischer, rotationssymmetrischer oder nicht-rotationssymmetrischer Geometrien an dem optischen Element (OE) anzuliegen.

7. Haltevorrichtung (100) gemäß einem der vorangegangenen Ansprüche, mit einer Vorspanneinrichtung (280) zum Vorspannen des beweglichen Rings (130) weg von dem Grundkörper (110), insbesondere wobei die Vorspanneinrichtung (280) ein elastisches Mittel oder Druckluftmittel aufweist.

8. Haltevorrichtung (100) gemäß einem der vorangegangenen Ansprüche, wobei der Grundkörper (110) einen Führungsabschnitt (112) aufweist, der ausgeformt ist, um eine Bewegung des beweglichen Rings (130) relativ zu dem Grundkörper (110) und dem feststehenden Ring (120) zu führen.

9. Haltevorrichtung (100) gemäß Anspruch 8, wobei zwischen dem Führungsabschnitt (112) des Grundkörpers (110) und einem geführten Abschnitt (136) des beweglichen Rings (130) eine Passung (150), insbesondere eine Spielpassung, als Gleitführung eingerichtet ist.

10. Haltevorrichtung (100) gemäß einem der vorangegangenen Ansprüche, mit an dem Grundkörper(110) angebrachten Führungsmitteln, die ausgebildet sind, um eine Bewegung des beweglichen Rings (130) relativ zu dem Grundkörper (110) und dem feststehenden Ring (120) zu führen, insbesondere wobei die Führungsmittel eine Membranführung aufweisen.

11. Haltevorrichtung (100) gemäß einem der vorangegangenen Ansprüche, wobei der Grundkörper (110) mindestens einen Anschlagabschnitt (114) aufweist, der ausgeformt ist, um eine Bewegung des beweglichen Rings (130) relativ zu dem Grundkörper (110) und dem feststehenden Ring (120) zu begrenzen.

12. Haltevorrichtung (100) gemäß einem der vorangegangenen Ansprüche, wobei an dem beweglichen Ring (130) eine Schulter (138) ausgeformt ist, die ausgebildet ist, um eine Bewegung des beweglichen Rings (130) relativ zu dem Grundkörper (110) und dem feststehenden Ring (120) zu begrenzen.

13. Haltevorrichtung (100) gemäß einem der vorangegangenen Ansprüche, wobei der bewegliche Ring (130) einteilig ausgeformt ist.

14. Haltevorrichtung (100) gemäß einem der Ansprüche 1 bis 12, wobei der bewegliche Ring (130) mehrteilig ausgeführt ist, wobei an einem ersten Teil (160) des beweglichen Rings (130) die Kontaktfläche (132) angeordnet ist, wobei an einem zweiten Teil (170) des beweglichen Rings (130) ein durch den Grundkörper (110) geführter Abschnitt (136) angeordnet ist, wobei der erste Teil (160) und der zweite Teil (170) des beweglichen Rings (130) miteinander verbunden sind.

15. Verfahren (300) zum Halten eines optischen Elements (OE) für dessen Prüfung, wobei das Verfahren (300) die folgenden Schritte umfasst:
Anordnen (302) der Haltevorrichtung (100) gemäß einem der vorangegangenen Ansprüche mit den Kontaktflächen (122, 132) in Anlage gegen das optische Element (OE); und
Erzeugen (304) des Vakuums in dem Spalt (140), um das optische Element (OE) zu halten.

16. Verfahren (300) gemäß Anspruch 15, wobei im Schritt (302) des Anordnens die Kontaktfläche (132) des beweglichen Rings (130) mittels einer Vorspanneinrichtung (280) in Anlage gegen das optische Element (OE) vorgespannt wird.
